# EUROPÄISCHE PATENTANMELDUNG

(11) **EP 2 065 526 A2**
(43) Veröffentlichungstag der Anmeldung: **03.06.2009**
(21) Anmeldenummer: 08020734.3
(22) Anmeldetag: 28.11.2008
(51) Int. Cl.: E04B 1/61, F16B 12/12, F16B 12/00

(54) **Verbindungssystem und Verbindungsvorrichtung**

(30) Priorität: 30.11.2007 DE 102007058156
(71) Anmelder: Zoller, Reiner, 74547 Untermunkheim (DE)
(72) Erfinder: Zoller, Reiner, 74547 Untermunkheim (DE)
(74) Vertreter: Lorenz, Markus

(57) **Zusammenfassung**

Die Erfindung betrifft ein Verbindungssystem für Bauelemente (1, 13, 14), Möbelelemente (100, 101) und dergleichen, mit Verbindungsteile (4a, 4b) zum Verbinden der Elemente (1, 13, 14, 100, 101) miteinander. In die Elemente (1, 13, 14 100, 101) sind in Längsrichtung der Elemente sich erstreckende Taschen (3) eingebracht. In diese Taschen werden die Verbindungsteile (4a, 4b) eingesetzt. Jeweils erste Verbindungsteile (4a) sind mit Längsnuten (5) versehen und werden in die Taschen (3) eines Elementes (1, 13, 14, 100, 101) eingesetzt. Zweite Verbindungsteile (4b) sind mit Längsrippen (7) versehen und werden in Taschen (3) eines zweiten mit dem ersten zu verbindenden Element (1, 13, 14, 100, 101) eingesetzt. Die zweiten Verbindungsteile (4b) mit den Längsrippen (7) sind zur Verbindung der Elemente (1, 13, 14, 100, 101) an die Längsnuten (5) der ersten Verbindungsteile (4a) senkrecht zur Ansetzrichtung der Elemente einschiebbar.

## Beschreibung

Die Erfindung betrifft ein Verbindungssystem gemäß dem Oberbegriff von Anspruch 1. Die Erfindung betrifft auch eine Verbindungsvorrichtung gemäß dem Oberbegriff von Anspruch 10.

In der DE 195 22 285 B4 ist eine Vertikalverbindung zwischen zwei Bauelementen, insbesondere Wand- oder Fassadenelementen beschrieben, wobei die Verbindung der Wandelemente oder Wandtafeln durch eine Vielzahl von Verbindungselementen erfolgt. Zur Verbindung werden jeweils Verbindungselemente in Schwalbenschwanzform mit Zapfen verwendet, die in Nuten eines zweiten Verbindungselementes in Eingriff kommen.

Durch die stufenartig unterteilten, schräg angeordneten und ineinander greifenden Zapfen und Nuten wird ein sehr kurzer Einführweg erreicht im Vergleich zu bekannten Konstruktionen, bei denen zur Montage ein Element bzw. eine Wandtafeln vollständig über die andere Wandtafeln hinaus angehoben werden musste und anschließend zum Verbinden entsprechend abgesenkt wurde.

Nachteilig bei der in der DE 195 22 285 B4 beschriebenen Verbindungsvorrichtung ist jedoch, dass sehr große und lange Verbindungselemente erforderlich sind, die sich über die gesamte Höhe der Wandtafel erstrecken. Die Herstellung der mit den Zapfen und Nuten versehenen Bauelemente ist relativ aufwendig und damit auch sehr kostenintensiv. Darüber hinaus ist eine Verbindung von Wandelementen, die nicht rechtwinklig oder parallel zueinander bzw. in Flucht angeordnet sind, problematisch.

Der vorliegenden Erfindung liegt daher die Aufgabe zugrunde, ein Verbindungssystem und eine Verbindungsvorrichtung zu schaffen, wodurch eine Verbindung auf relativ einfache Weise, sicher und schnell erfolgen kann.

Erfindungsgemäß wird diese Aufgabe dadurch gelöst, dass in die Elemente in Längsrichtung der Elemente sich erstreckende Taschen eingebracht werden, in die Verbindungsteile eingesetzt werden, wobei jeweils erste Verbindungsteile, die mit Längsnuten versehen sind, in die Taschen eines ersten Elements eingesetzt werden, und dass zweite Verbindungsteile, die mit Längsrippen versehen sind, in die Taschen eines zweiten mit dem ersten zu verbindenden Elements eingesetzt werden, wobei die zweiten Verbindungsteile mit den Längsrippen zur Verbindung der beiden Elemente in die Längsnuten der ersten Verbindungsteile senkrecht zur Ansetzrichtung der Elemente einschiebbar sind.

Die Elemente können verschiedenartig gestaltet sein. Der Erfinder hat erkannt, dass sich das Verbindungssystem besonders vorteilhaft für großflächige Tafeln, insbesondere für Wandtafeln aus Holz oder holzartigen Elementen im Fertig- oder Fertigteilebau, mit vertikalen Stützelementen an denen die Tafeln befestigt sind eignen. In diesem Fall können die Verbindungselemente zum Verbinden der Tafeln miteinander in den Stützelementen eingebracht sein. Dabei können die Verbindungselemente in Taschen eingebracht sein, die sich in Längsrichtung der Stützelemente erstrecken.

Das erfindungsgemäße Verbindungssystem eignet sich jedoch auch zum Verbinden von Möbelteilen zum Herstellen von Möbeln. Das Verbindungssystem eignet sich ferner zum Aufstellen von Messeständen, insbesondere bei großflächigen Elementen von Messeständen, die miteinander verbunden werden sollen. Durch das erfindungsgemäße Stecksystem ergibt sich eine stabile bzw. statische Verbindung die jedoch problemlos wieder gelöst werden kann. Das erfindungsgemäße Verbindungssystem eignet sich auch besonders zum Herstellen von Arbeitsplatzsystemen bspw. für Büros oder in der Montage bei denen verschiedene Elemente des Arbeitsplatzes sicher und zuverlässig miteinander verbunden werden sollen. Ferner eignet sich das erfindungsgemäße Verbindungssystem auch zur Befestigung eines Werkstücks auf einer CNC-Bearbeitungsmaschine. Dabei kann ein erstes Verbindungsteil des Verbindungssystems an dem Bearbeitungstisch der CNC-Bearbeitungsmaschine ausgebildet sein. Das zweite Verbindungsteil kann in das zu bearbeitende Werkstück eingebracht, bspw. eingefräst sein. Somit lässt sich das Werkstück zuverlässig und sicher mit der CNC-Bearbeitungsmaschine verbinden.

Das erfindungsgemäße Verbindungssystem lässt sich auch vorteilhaft zum Verbinden von sog. Hohlkammerverbindern, z.B. Aluminiumrohren einsetzen.

Bei dem erfindungsgemäßen Verbindungssystem ist es weder erforderlich ein Element, z.B. eine Wandtafel von oben her in ihrer gesamten Länge in das andere Element durch entsprechende Führungen einzuschieben noch ist eine Bearbeitung der Elemente in ihrer Gesamtheit bzw. über ihre gesamte Länge notwendig.

Vorzugsweise werden lediglich einzelne Taschen in die äußeren Längsseiten der Elemente, und dabei vorzugsweise in deren Stützelemente an den äußeren Längsseiten bzw. den jeweils zu den benachbarten Element gerichteten Seiten, mit denen eine Verbindung erfolgen soll, eingebracht. Je nach Höhe der Elemente sind dabei im Allgemeinen 2 bis 4 Taschen ausreichend. Selbstverständlich sind hier - je nach Anwendungs- und Belastungsfall - auch noch andere Anzahlen möglich.

Die Elemente könnten aus verschiedenen Materialien, z.B. aus Holz, Kunststoff, Metall (z.B. Aluminium oder Blech) ausgebildet sein.

Die Stützelemente können in einfacher Weise als Pfosten, z.B. aus Holz, Kunststoff oder Metall (z.B. Aluminium oder Blech) ausgebildet sein. Ebenso sind weitere andere Materialien dafür möglich.

Die nachfolgenden Erläuterungen bzgl. der Ausbildung der Elemente als Wandtafeln bzw. Tafeln gelten analog auch für die Ausbildung der Elemente als Möbelteile, Teile von Messeständen oder Arbeitsplatzsystemen.

Zum Herstellen einer Verbindung zwischen zwei Tafeln ist es lediglich erforderlich in die Taschen die Verbindungselemente einzusetzen. Hierzu bestehen diese erfindungsgemäß aus ersten und zweiten Verbindungsteilen, die in die sich gegenüberliegenden Taschen entsprechend eingesetzt werden und die bei ihrer Verbindung miteinander somit auch die Verbindung der Tafeln herstellen. Die Verbindungselemente können auf beliebige Weise in den Taschen befestigt sein, wie z. B. durch Kleben, Nageln oder Schrauben.

Ein wesentlicher Vorteil des erfindungsgemäßen Verbindungssystems besteht darin, dass die Verbindungselemente bausteinartig vorgefertigt werden können. Je nach Bedarf können dann die auf Vorrat gehaltenen Verbindungselemente während der Montage in die Taschen eingesetzt und darin befestigt werden. Wenn die Taschen entsprechend länger, mindestens doppelt so lang wie die Verbindungselemente ausgebildet werden, können die Wandtafeln ohne großen Höhenversatz zueinander ausgerichtet und dann durch eine kurze vertikale Bewegung miteinander verbunden werden, wobei die beiden Verbindungsteile durch ein Einschieben der Längsrippen eines Verbindungsteiles in die Längsnuten des damit zu verbindenden Verbindungsteiles miteinander verbunden werden.

Durch eine entsprechende Gestaltung der beiden Verbindungsteile, insbesondere dann wenn sich die Verbindungsteile wenigstens annähernd gleichmäßig in Richtung auf ein Ende verjüngen, können die beiden Verbindungsteile auch senkrecht zueinander angesetzt werden. D.h. es ist nicht notwendig das Verbindungsteil mit der Längsrippe über die gesamte Strecke der Längsnut des anderen Verbindungsteiles einzuschieben, vielmehr kann die Rippe bspw. auf halbem Weg direkt in die Längsnut eingesetzt und erst dann in Richtung auf das vordere (schmale) Ende der Längsnut verschoben werden. Dies ist aufgrund der sich verjüngenden Ausgestaltung der Längsnut und der Längsrippe möglich.

In einer sehr vorteilhaften Ausgestaltung der Erfindung kann vorgesehen sein, dass die Längsnuten und die in die Längsnuten einschiebbaren Längsrippen derart ausgebildet sind, dass die Verbindung unter Klemmung stattfindet. Durch diese Maßnahme wird eine sichere und spielfreie Verbindung der miteinander zu verbindenden Tafeln erreicht.

Die erfindungsgemäße Klemmung kann auf verschiedene Weise erreicht werden. Eine sehr vorteilhafte Lösung kann darin bestehen, dass sich die Längsnuten und die Längsrippen der Verbindungsteile in der Draufsicht gesehen - bezogen auf die Ansetzrichtung - in ihren Breiten gegen die Einschubrichtung verjüngen.

Eine weitere sehr vorteilhafte Ausgestaltung der Erfindung kann darin bestehen, dass wenigstens ein Teil der Verbindungsteile jeweils teilweise über die Längsseite des Stützelements bzw. über die Tasche vorsteht.

Im Unterschied zu bekannten Verbindungssystemen, wobei Bohrungen und in die Bohrungen einführbare Zapfen vorgesehen sind und bei denen mitunter bei der Montage nicht erkennbar ist, ob die Bohrungen und Zapfen miteinander fluchten, ist durch das teilweise Vorstehen der Verbindungsteile deren Lage und Zuordnung zueinander erkennbar, so dass eine exakte Montage erfolgen kann.

Eine sehr vorteilhafte Weiterbildung der Erfindung kann darin bestehen, dass die Verbindungsteile wenigstens annähernd in Keilform ausgebildet sind.

Durch die Keilform lässt sich ein spielfreies bzw. fugenloses Aneinandersetzen der Tafeln erreichen. Durch die Keilform nähern sich beim Einschieben der Längsrippen des einen Verbindungsteiles in die Längsnuten des anderen Verbindungsteiles die beiden Wandtafeln horizontal einander an. Diese Annäherung erfolgt solange, bis die Tafeln exakt aneinander gestoßen sind.

Dabei kann in einer Weiterbildung vorgesehen sein, dass die Keilform der Verbindungsteile derart ausgebildet ist, dass die Gesamtdicke der beiden Verbindungsteile im eingeschobenen Zustand wenigstens annähernd der maximalen Keildicke des Verbindungsteiles entspricht, das mit der Längsnut versehen ist.

Für eine sichere und spielfreie Verbindung der beiden Verbindungsteile miteinander können form- oder kraftschlüssige Verbindungen vorgesehen sein. Eine vorteilhafte Möglichkeit kann darin bestehen, dass die Längsnuten an den Rändern mit Hinterschneidungen versehen sind, und dass die Ränder der Längsrippen derart konisch ausgebildet sind, dass sie in den Hinterschneidungen geführt sind. In einfacher Weise können die Hinterschneidungen dabei wenigstens annähernd in Schwalbenschwanzform ausgebildet sein.

Um stark über die Längsseiten der Stützelemente vorstehende und damit einer Beschädigungsgefahr ausgesetzten Bereiche der Verbindungsteile zu vermeiden oder wenigstens zu reduzieren kann weiterhin vorgesehen sein, dass das Verbindungsteil, das mit der Längsnut versehen ist, auf seiner nach außen, zu dem anderen mit der Längsrippe versehenen Verbindungsteil gerichteten Seite mit einer Abflachung in dem keilförmigen Verlauf versehen ist, und dass das Verbindungsteil, das mit der Längsrippe versehen ist, an die Abflachung zur Bildung einer maximalen Dicke, die der maximalen Dicke des Verbindungsteiles mit der Längsnut entspricht, angepasst ist.

Für den vorgesehenen Zweck hat sich als Material für die Verbindungselemente Furnierschichtholz herausgestellt. Selbstverständlich sind jedoch auch andere Materialien, wie zum Beispiel Konstruktionsvollholz oder auch andere Materialien, wie Kunststoff oder Metall (z.B. Aluminium oder Blech), grundsätzlich möglich.

Eines der bevorzugten Einsatzgebiete des erfindungsgemäßen Verbindungssystems ist der Fertigbau mit den dabei verwendeten großflächigen Wandtafeln. Die Erfindung ist jedoch selbstverständlich hierauf nicht beschränkt. Weitere Einsatzgebiete sind ganz allgemein Bauelemente, insbesondere großflächige Elemente. Das erfindungsgemäße Verbindungssystem kann z. B. für Betonfertigteile eingesetzt werden, ebenso jedoch auch für oder als Verbundelement zwischen Beton, Holz und Stahl.

Als Materialien sind neben Holz auch Kunststoff, Metall, Beton oder andere Materialien einsetzbar.

Das erfindungsgemäße Verbindungssystem ist auch im Möbelbau zur Montage von Möbeln aus einzelnen Möbelelementen verwendbar.

In den übrigen Ansprüchen und in den nachfolgend anhand der Zeichnung prinzipmäßig beschriebenen Ausführungsbeispielen sind weitere erfindungsgemäße Merkmale ersichtlich.

Es zeigt:
- Fig. 1: eine Stirnansicht einer Wandtafel mit einem ersten verbindungsteil, das mit einer Längsnut versehen ist,
- Fig. 2: eine Stirnansicht einer Wandtafel mit einem zweiten Verbindungsteil, das mit einer Längsrippe versehen ist,
- Fig. 3: einen Querschnitt nach der Linie III - III der Fig. 1 mit dem eingesetzten Verbindungsteil, das mit der Längsnut versehen ist,
- Fig. 4: einen Querschnitt nach der Linie IV - IV der Fig. 2 mit dem eingesetzten Verbindungsteil, das mit der Längsrippe versehen ist,
- Fig. 5: eine Verbindung einer Wandtafel mit einer zweiten Wandtafel mit halb ineinander eingeschobenen Verbindungsteilen,
- Fig. 6: die beiden Wandtafeln nach der Fig. 5 im voll eingeschobenen Zustand der Verbindungsteile,
- Fig. 7: eine perspektivische Ansicht des ersten Verbindungsteiles mit einer Längsnut,
- Fig. 8: eine perspektivische Ansicht des zweiten Verbindungsteiles mit der Längsrippe,
- Fig. 9: eine perspektivische Ansicht des ersten Verbindungsteiles nach der Fig. 7 in einer abgewandelten Ausgestaltung,
- Fig. 10: eine perspektivische Ansicht des zweiten Verbindungsteiles gemäß Fig. 8 in einer abgewandelten Ausgestaltung,
- Fig. 11: eine perspektivische Ansicht des ersten Verbindungsteiles mit einer Einführhilfe;
- Fig. 12: eine perspektivische Ansicht zweier zu verbindender Elemente in einer Ausgestaltung als Aluminiumprofile;
- Fig. 13: eine prinzipmäßige Darstellung einer CNC-Bearbeitungsmaschine mit einem Bearbeitungstisch, welcher mit einer Aufnahme versehen ist, die eine Längsrippe zur Befestigung eines Werkstückes aufweist; und
- Fig. 14: ein Werkstück mit eine Längsnut zur Anbindung an der Längsrippe der CNC-Bearbeitungsmaschine gemäß Figur 13.

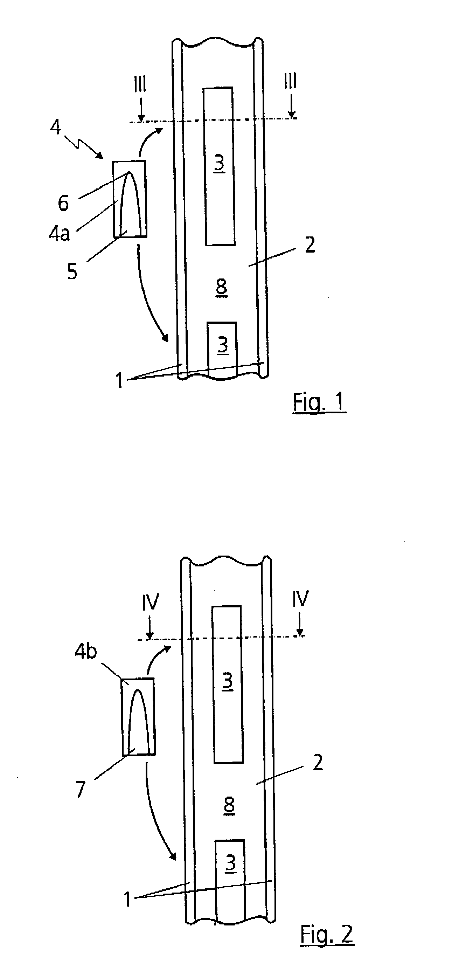

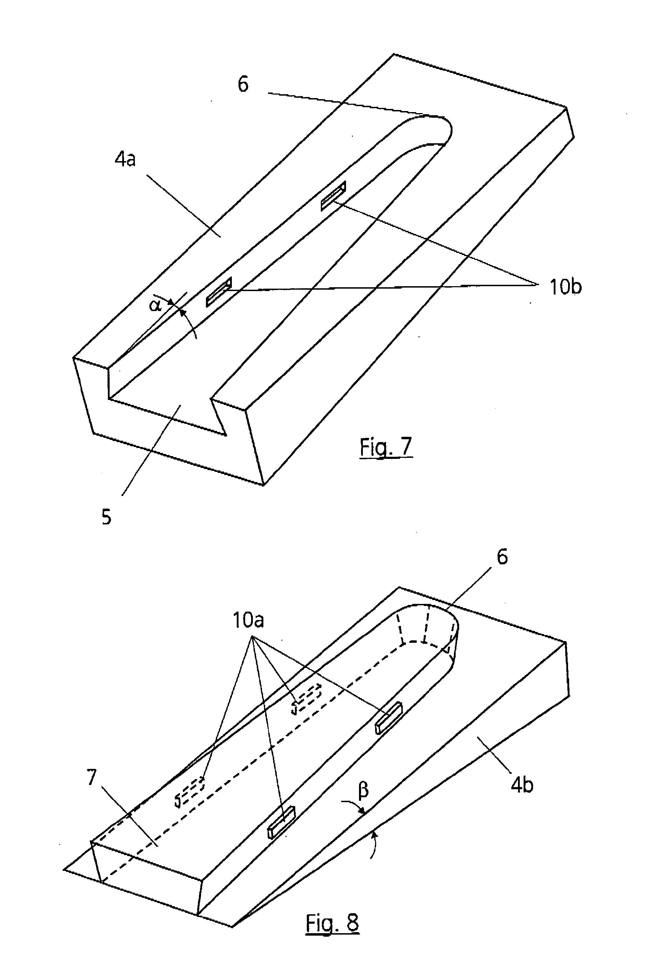

In den Figuren 1 und 2 sind die Stirnseiten von großflächigen Tafeln, im vorliegenden Falle einer Wandtafel aus Holz im Fertigbau dargestellt. Derartige Wandtafeln sind im Allgemeinen als Rahmenkonstruktion gefertigt, wobei Platten, z. B. Spanplatten 1 in nicht näher dargestellter Weise an vertikalen Stützelementen in Form von Pfosten 2 befestigt werden. Auf den Spanplatten 1 können in bekannter Weise noch Gipskartonplatten angeordnet werden. Zur Isolierung ist der Zwischenraum zwischen den sich gegenüberliegenden Spanplatten 1 im Allgemeinen mit einer Dämmung versehen. In die Längsseiten der Stützelemente 2 sind über dessen Länge verteilt Taschen 3 eingefräst, wobei im Allgemeinen bei einer Wandtafel in Höhe von 2 bis 3 m zwei bis vier Taschen vorgesehen sind. In die Taschen 3 werden Verbindungselemente 4 eingesetzt, wobei in die Taschen 3 gemäß Fig. 1 erste Verbindungsteile 4a eingesetzt werden, die jeweils mit Längsnuten 5 versehen sind. Wie ersichtlich ist die Längsnut 5 zu einer Stirnseite des Verbindungsteiles 4a hin offen und zur anderen Stirnseite hin abgeschlossen und mit einer Abrundung 6 versehen. Hierzu wird auch auf die vergrößerte Darstellung in der Fig. 7 hingewiesen.

Wie weiterhin ersichtlich verjüngt sich die Längsnut 5 von ihrer offenen Seite aus in Richtung zu der Abrundung 6 und damit bezüglich ihrer Breite gegen die Einschubrichtung, welche normalerweise senkrecht von oben nach unten ist, wie dies nachfolgend noch näher beschrieben wird. Der Winkel α der Verjüngung kann (siehe Fig. 7) zwischen 2 und 10°, vorzugsweise 4° betragen.

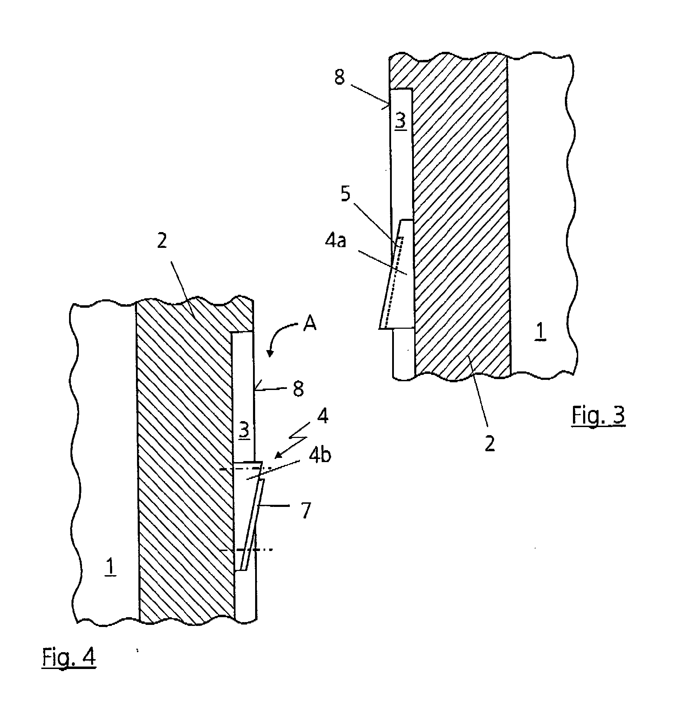

Das zweite Teil des Verbindungselementes 4, neben dem ersten Verbindungsteil 4a, wird als zweites Verbindungsteil 4b in die Taschen 3 des Stützelements 2 eingesetzt. Anstelle mit Längsnuten 5 sind diese Verbindungsteile 4b mit Längsrippen 7 versehen, die in ihrer Lage und Form jeweils den Längsnuten 5 der Verbindungsteile 4a entsprechen. Hierzu wird auch auf die vergrößerte perspektivische Darstellung in der Fig. 8 verwiesen. Aus den Seitenansichten in den Fig. 3 und 4 und in den perspektivischen Ansichten gemäß Fig. 7 und 8 ist ersichtlich, dass die beiden Verbindungsteile 4a und 4b in Keilform ausgebildet sind. Der Keilwinkel β kann dabei zwischen 5 und 20°, vorzugsweise 10° betragen (siehe Fig. 8).

In den Figuren 1 bis 11 sind verschiedene Ausgestaltungen des Verbindungssystems anhand des Beispiels einer großflächigen Tafel, im vorliegenden Fall einer Wandtafel aus Holz dargestellt. Die Erfindung ist jedoch nicht auf diese Ausführungsform beschränkt, vielmehr kann er sich bei den zu verbindenden Elementen 1, 100, 101 um nahezu beliebige Elemente handeln, wie z.B. Möbelteile eines Möbels, Arbeitsplatzteile bzw. Gestellteile eines Arbeitsplatzsystems, Elemente eines Messestandes und dergleichen. Das Grundprinzip der erfindungsgemäßen Logik zur Verbindung zweier Elemente 1, 100,101 ist nicht davon abhängig, wie die zu verbindenden Elemente konkret ausgebildet sind. Die nachfolgend anhand der Tafel beschriebenen Merkmale und die Funktionsweise geltend analog auch für alle anderen möglichen Elemente.

In dem nachfolgend beschriebenen Ausführungsbeispiel sind die Verbindungsteile in Stützelementen, vorzugsweise vertikalen Stützelementen der Elemente 1 integriert. Dies eignet sich grundsätzlich auch besonders, wenn es sich bei den zu verbindenden Elementen um Möbelteile, Arbeitsplatzteile oder Teile für Messeständen handelt. Es kann sich hierbei um vertikale oder um horizontale Stützelemente handeln. Grundsätzlich kann das erfindungsgemäße Verbindungssystem jedoch an einer beliebigen Stelle der zu verbindenden Elemente ausgebildet sein.

Aus den Fig. 3 bis 6 ist das Verfahren zum Verbinden der beiden Wandtafeln über die Stützelemente 2 gemäß Fig. 1 und 2 näher ersichtlich. Das Stützelement 2 mit dem Verbindungsteil 4a gemäß Fig. 3 ist entsprechend so hoch über dem Stützelement 2 gemäß Fig. 4 anzuheben, dass sich das Verbindungsteil 4a über dem Verbindungsteil 4b befindet. Zum Verbinden wird das Stützelement 2 gemäß Fig. 3 in Pfeilrichtung A dem Stützelement gemäß Fig. 4 angenähert, wobei das Verbindungsteil 4a in die entsprechend verlängerte Tasche 3 des Stützelements gemäß Fig. 4 teilweise eingesetzt und anschließend in Pfeilrichtung A nach unten in Richtung auf das Verbindungsteil 4b bewegt wird.

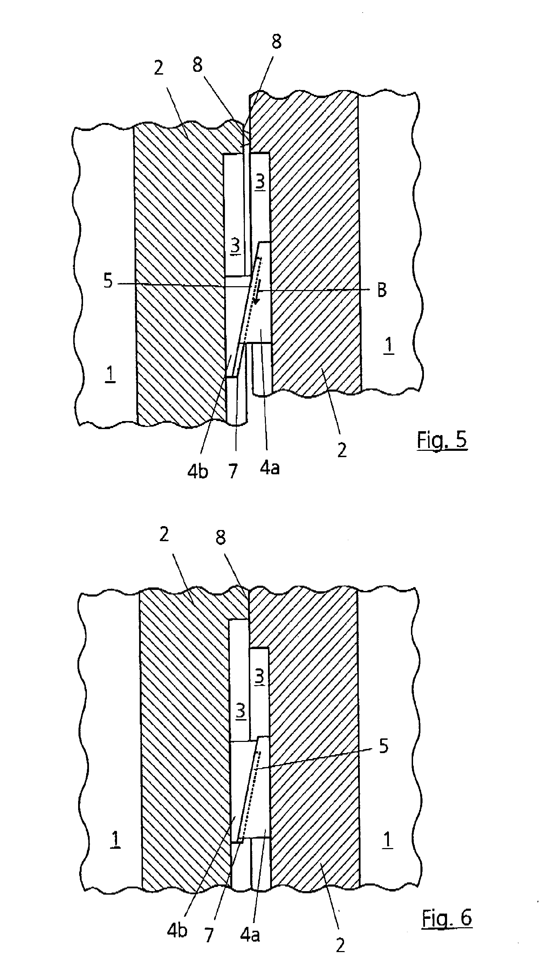

Bei der weiteren nach unten gerichteten Bewegung gemäß Pfeil B in der Fig. 5 wird die Längsnut 5 des Verbindungsteiles 4a über die Längsrippe 7 des Verbindungsteiles 4b geschoben.

Wie aus den Fig. 7 und 8 ersichtlich ist, ist die Längsnut 5 an ihren Rändern mit einer Hinterschneidung in Schwalbenschwanzform versehen und die Längsrippe 7 des Verbindungsteiles 4b ist an ihren Rändern entsprechend konisch bzw. schräg ausgebildet. Auf diese Weise ergibt sich eine formschlüssige sichere Verbindung zwischen den miteinander zu verbindenden Wandtafeln. Ein horizontales Auseinanderziehen ist damit nicht mehr möglich.

Das Einführen der Längsrippe 7 in die Längsnut 5 oder umgekehrt ist zu Beginn der Verbindung jedoch problemlos aufgrund des Einführens von der größten Breitenerstreckung der Längsnut 7 aus und des sich verjüngenden Verlaufes der Längsnut 5 und der Längsrippe 7 möglich. Erst gegen Ende der Einsetz- bzw. Schiebebewegung erfolgt die Führung der Längsrippe 7 in der Längsnut 5 und damit die horizontale Sicherung aufgrund der Schwalbenschwanzform.

Wie aus den Fig. 3 und 4 ersichtlich ist, stehen die beiden Verbindungsteile 4a und 4b jeweils teilweise außenseitig über die Längsseiten 8 der Stützelemente 2 über, in deren Taschen 3 sie eingesetzt wurden. Dies bedeutet, bei der Montage lassen sich die Positionen und die jeweiligen Zuordnungen der Verbindungsteile 4a und 4b für eine präzises Einsetzen von der Seite her kontrollieren. Dies ist insbesondere dann von Vorteil, wenn - wie es normalerweise der Fall ist - mehrere Verbindungselemente 4 mit den beiden Verbindungsteilen 4a und 4b über die Länge der Wandtafeln verteilt angeordnet sind.

Die Schiebenbewegung gemäß Pfeil B erfolgt solange, bis eine Klemmung der beiden Verbindungsteile 4a und 4b aufgrund der sich verjüngenden Längsnut 5 und der Längsrippe 7 erfolgt. Die ungefähre Endposition ist aus der Fig. 6 ersichtlich. Wie weiterhin aus dieser Figur ersichtlich ist, ist die Keilform der Verbindungsteile 4a und 4b derart ausgebildet, dass die Gesamtdicke der beiden Verbindungsteile im eingeschobenen Zustand wenigstens annähernd der maximalen Keildicke des Verbindungsteiles 4a mit der Längsnut 6 entspricht.

Im Vergleich der Positionen der beiden Wandtafeln in den Fig. 5 und 6 ist auch ersichtlich, dass aufgrund der Keilformen der Verbindungsteile 4a und 4b eine Annäherung der beiden Stützelemente 2 bei der Einsetzbewegung zueinander erfolgt, bis diese gemäß Fig. 6 spielfrei im Endzustand aneinander gestoßen sind, womit auch die beiden Wandtafeln ohne Spalt exakt aneinander gefügt sind.

Die Befestigung der Verbindungsteile 4a und 4b in den Taschen 3 kann z. B. durch Schrauben erfolgen, wie dies in der Fig. 4 durch die strichpunktierte Linie angedeutet ist. Selbstverständlich sind hier auch noch andere Befestigungsarten möglich.

Ebenso ist es nicht unbedingt erforderlich, dass jeweils beide Verbindungsteile 4a und 4b bereichsweise über die Längsseiten 8 der Stützelemente 2 vorstehen. Im Bedarfsfalle kann auch ein Verbindungsteil vollständig in einer Tasche aufgenommen sein, wobei dann das andere Verbindungsteil entsprechend weiter über die Längsseite 8 vorragt.

Da über die Längsseite 8 bzw. Stirnseite des Stützelements vorragende Teile stets die Gefahr von Beschädigungen beinhalten, kann in einer Ausgestaltung der Erfindung auch vorgesehen sein, dass die Keilform des Verbindungsteiles 4a mit der Längsnut 5 im Endbereich seiner Verdickung mit einer Abflachung bzw. Anschrägung 9 versehen sein. Der Winkel der Anschrägung ist dabei so gewählt, dass sich beim Einfügen des Verbindungsteiles 4a in die Tasche 3 eine vertikale Fläche ergibt, die z. B. bündig mit der Stirnseite der Längsseite 8 sein kann.

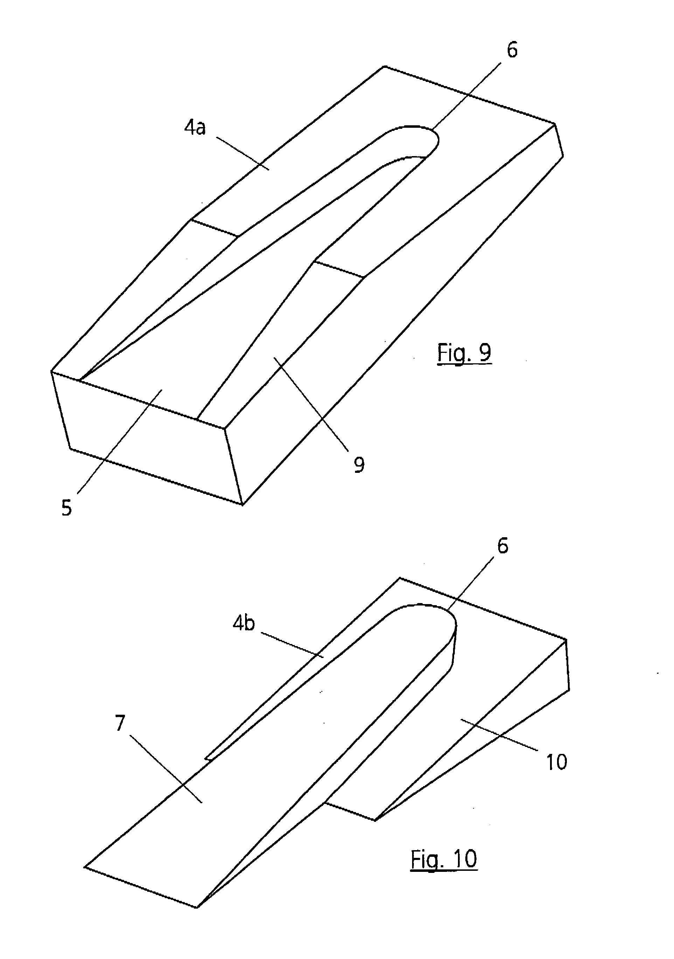

Wie aus der Fig. 10 ersichtlich ist, ist das Verbindungsteil 4b mit der Längsrippe 7 in diesem Falle entsprechend anzupassen. Wie ersichtlich verjüngt sich dabei die Längsrippe 7 und das darunter liegende Keilstück 10 ist entsprechend kürzer.

Im Unterschied zu den meisten Konstruktionen nach dem Stand der Technik können bei der erfindungsgemäßen Lösung nicht nur Wandtafeln miteinander fluchtend oder in rechten Winkeln verbunden werden, sondern in beliebigen Winkelstellung zueinander. In diesem Falle sind die Stützelemente 2 lediglich so zueinander anzuordnen oder in ihrer Form so auszubilden, dass deren Stirnseiten, in denen sich die Taschen 3 zur Verbindung befinden, senkrecht zu der gewünschten Winkelstellung der zu verbindenden Wandtafeln liegen.

In den Figuren 7 und 8 ist zusätzlich zu der formschlüssigen Verbindung vorgesehen, dass die Verbindungsteile 4a, 4b kraftschlüssige Verbindungselemente 10a und 10b aufweisen. Dabei kann vorgesehen sein, dass die Längsrippe 7 mit vorstehenden kraftschlüssigen Verbindungselementen 10a versehen ist, die in entsprechende Rücksprünge bzw. Nuten bzw. Einkerbungen 10b in der Längsnut 5 des ersten Verbindungselementes 4a einrasten, wenn die vorgesehene Positionierung erreicht ist. Das Einrasten kann bspw. durch eine federnde Ausgestaltung der kraftschlüssigen Verbindungselemente 10a erfolgen. Alternativ ist auch eine Beeinflussung durch Magnetkräfte. D.h. die kraftschlüssigen Verbindungselemente (10a, 10b) können durch Magnetkräfte geschlossen werden. Aus dem Stand der Technik sind ferner weitere kraftschlüssige Verbindungselemente z.B. Widerhaken übertragbar. Alternativ dazu kann auch vorgesehen sein, dass die formschlüssige Verbindung zwischen der Längsnut 5 und der Längsrippe 7 durch Kleben unterstützt wird.

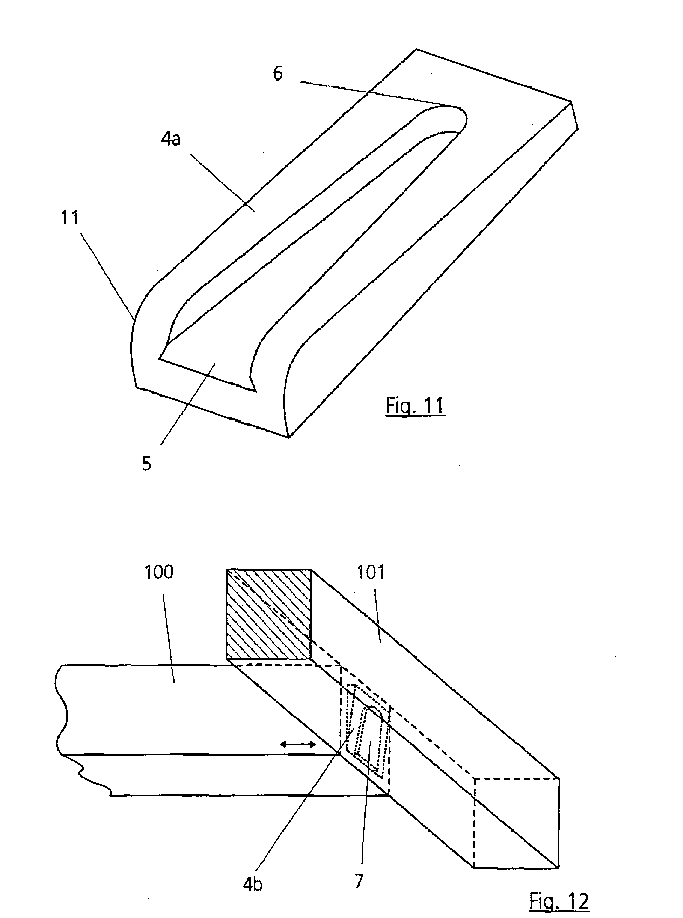

In Figur 11 ist eine weitere Ausführungsform des ersten Verbindungsteiles 4a dargestellt. Diese kann grundsätzlich die Merkmale aufweisen, die gemäß der Figuren 7 und 9 bereits beschrieben wurden. Gemäß Figur 11 ist darüber hinaus eine Einführhilfe 11 vorgesehen um eine Beschädigung der zu verbindenden Elemente durch scharfe Kanten zu vermeiden und um das Einfahren der Längsrippe in die Längsnut zu vereinfachen. Die Einführhilfe kann durch eine Phase und/oder eine Krümmung realisiert sein.

Figur 12 zeigt eine Ausgestaltung der zu verbindenden Elemente 100, 101 als Aluminiumprofile. Grundsätzlich kann es hierbei jedoch um beliebige Stützen oder Trägerelemente bzw. um ein beliebiges Element handeln. Möglich ist es auch wenigstens eines der beiden zu verbindenden Elementen als Hohlkammerrohr oder dergleichen auszubilden. Gemäß Figur 12 ist vorgesehen, dass das erste und das zweite Verbindungsteil jeweils bereits an dem zu verbindenden Element ausgebildet sind, d.h. diese müssen nicht mehr im Rahmen der Montage separat aufgebracht werden. Gemäß Figur 12 ist aus Übersichtlichkeitsgründen lediglich das zweite Verbindungselement 4b an dem Element 100 (an dessen Stirnseite) dargestellt. Das erste (nicht dargestellte) Verbindungselement 4b ist an dem Element 101 ausgebildet und so mit dem Verbindungselement 4a verbunden, dass die Elemente 100, 101 stabil und belastbar miteinander verbunden sind. Durch die Wahl der Steigung "β" bzw. durch die Tiefe der nicht näher dargestellten Taschen 3 kann der Abstand zwischen den zu verbindenden Elementen 100, 101 variiert werden. Dabei ist es möglich die Elemente 100, 101 durch eine entsprechende Wahl der Steigung "β" und der Tiefe der Taschen 3 so aufeinander zu pressen, dass eine dichte Verbindung erzielt wird. Diese kann sich bspw. umlaufend an der Stirnkante des Elementes 100 ergeben. In Figur 12 ist die sich durch das Schließen des Verbindungssystems ergebende Bewegung des Elementes 100 prinzipmäßig dargestellt.

In einer nicht näher dargestellten Ausführungsform kann auch vorgesehen sein, dass die Verbindungsteile 4a, 4b an einem Ventilator zur Anbindung der Flügel des Ventilators ausgebildet sind. Dabei kann ein Verbindungsteil an dem Flügel und das andere Verbindungsteil an dem Ventilator bzw. an dem Element des Ventilators an dem der Flügel angebracht werden soll, ausgebildet sein. Dieses Prinzip ist auch auf andere Elemente anwendbar.

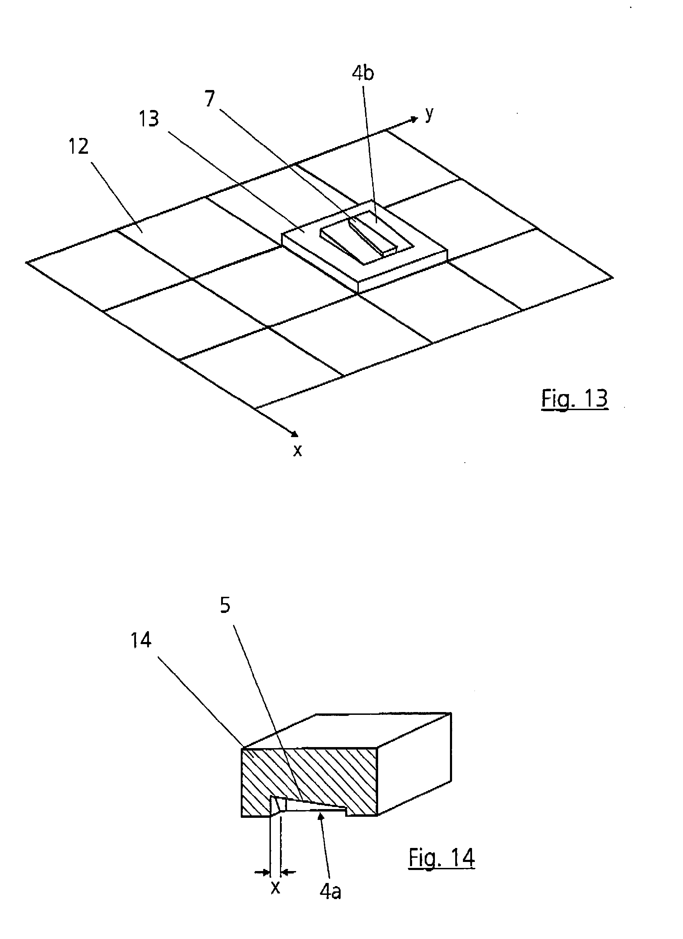

Figur 13 zeigt einen Bearbeitungstisch 12 einer CNC-Bearbeitungsmaschine. Dabei ist eine Aufnahme 13 vorgesehen auf welcher das zweite Verbindungsteil 4a mit der Längsrippe 7 ausgebildet ist. Entsprechend hierzu ist in einem Werkstück 14 (s. Figur 14) das erste Verbindungsteil 4a mit einer Längsnut 5 ausgebildet. Das Werkstück 14 lässt sich in der bereits beschriebenen Weise auf die Aufnahme 13 aufschieben. Der Erfinder hat dabei in überraschender Weise herausgefunden, dass sich dadurch eine hochbelastbare Verbindung ergibt, die sich insbesondere zur Aufnahme der vielfältigen beim CNC-Fräsen auftretenden Kräfte besonders eignet. Gegebenenfalls kann ergänzend eine kraftschlüssige Verbindung vorgesehen sein, so wie dies bzgl. der Figuren 7 und 8 beschrieben ist. Vorteilhaft kann zudem eine nachfolgend näher beschriebene Vorspannung sein. Die Längsrippe 7 und die Längsnut 5 können bspw. gemäß den Figuren 7 bis 11 ausgebildet sein.

Von Vorteil bei den dargestellten Ausführungsbeispielen kann es sein, wenn zwischen der Abrundung 6 der Längsrippe 7 und der Abrundung 6 der Längsnut 5, d.h. am Zapfenlochgrund im eingeschobenen Zustand der Längsrippe 7 ein Abstand von bis zu 4 mm, vorzugsweise 2 mm, verbleibt. Dadurch lässt sich die Längsrippe 7 in der Längsnut 5 mit Vorspannung fixieren. Kräfte können dadurch über die gesamte Kontaktfläche der Stirnseite/Flanken der Längsrippe 7 übertragen werden. Eine Vorspannung kann alternativ auch durch einen geeigneten Verlauf/Neigung der Verjüngung der Längsrippe 7/Längsnut 5 erreicht werden.

## Patentansprüche

1. Verbindungssystem für Bauelemente (1, 13, 14), Möbelelemente (100, 101) und dergleichen, mit Verbindungsteilen (4a, 4b) zum Verbinden der Elemente (1, 13, 14, 100, 101) miteinander,
**dadurch gekennzeichnet, dass**
in die Elemente (1, 13, 14, 100, 101) in Längsrichtung der Elemente sich erstreckende Taschen (3) eingebracht sind, in die Verbindungsteile (4a, 4b) eingesetzt werden, wobei jeweils erste Verbindungsteile (4a), die mit Längsnuten (5) versehen sind, in die Taschen (3) eines Elements (1, 13, 14, 100, 101) eingesetzt werden, und dass zweite Verbindungsteile (4b), die mit Längsrippen (7) versehen sind, in die Taschen (3) eines zweiten mit dem ersten zu verbindenden Element (1, 13, 14, 100, 101) eingesetzt werden, wobei die zweiten Verbindungsteile (4b) mit den Längsrippen (7) zur Verbindung der Elemente (1, 13, 14, 100, 101) in die Längsnuten (5) der ersten Verbindungsteile (4a) senkrecht zur Ansetzrichtung der Elemente einschiebbar sind.

2. Verbindungssystem nach Anspruch 1,
**dadurch gekennzeichnet, dass**
die Längsnuten (5) und die in die Längsnuten einschiebbaren Längsrippen (7) derart ausgebildet sind, dass die Verbindung unter Klemmung stattfindet.

3. Verbindungssystem nach Anspruch 2,
**dadurch gekennzeichnet, dass**
sich die Längsnuten (5) und die Längsrippen (7) der Verbindungsteile (4a, 4b) in der Draufsicht gesehen - bezogen auf die Ansetzrichtung - in ihren Breiten gegen die Einschubrichtung verjüngen.

4. Verbindungssystem nach einem der Ansprüche 1 bis 3,
**dadurch gekennzeichnet, dass**
die Verbindungsteile (4a, 4b) wenigstens annähernd in Keilform ausgebildet sind.

5. Verbindungssystem nach Anspruch 4,
**dadurch gekennzeichnet, dass**
die Keilform der Verbindungsteile (4a, 4b) derart ausgebildet ist, dass die Gesamtdicke der beiden Verbindungsteile im eingeschobenen Zustand wenigstens annähernd der maximalen Keildicke des Verbindungsteiles (4a) entspricht, das mit der Längsnut (5) versehen ist.

6. Verbindungssystem nach einem der Ansprüche 1 bis 5,
**dadurch gekennzeichnet, dass**
die Längsnuten (5) an den Rändern mit Hinterschneidungen versehen sind, und dass die Ränder der Längsrippen (7) derart konisch ausgebildet sind, dass sie in den Hinterschneidungen geführt sind.

7. Verbindungssystem nach einem der Ansprüche 1 bis 6,
**dadurch gekennzeichnet, dass**
die Längsnuten (5) und die Längsrippen (7) der Verbindungsteile (4a, 4b) an ihren vorderen Enden - in Einschubrichtung gesehen - mit Abrundungen (6) versehen sind.

8. Verbindungssystem nach einem der Ansprüche 1 bis 7,
**dadurch gekennzeichnet, dass**
das Verbindungsteil (4a), das mit der Längsnut (5) versehen ist, auf seiner nach außen, zu dem anderen mit der Längsrippe (7) versehenen Verbindungsteil (4b) gerichteten Seite mit einer Abflachung (9) in dem keilförmigen Verlauf versehen ist, und dass das Verbindungsteil (4b), das mit der Längsrippe (7) versehen ist, an die Abflachung (9) zur Bildung einer Dicke, die der maximalen Dicke des Verbindungsteiles (4a) mit der Längsnut (5) entspricht, angepasst ist.

9. Verbindungssystem nach einem der Ansprüche 1 bis 8
**dadurch gekennzeichnet, dass**
die Bauelemente (1, 13, 14, 100, 101) als großflächige Tafeln, insbesondere Wandtafeln (1) aus Holz oder holzartigen Elementen im Fertig- oder Fertigteilebau oder als Möbelelemente (100, 101) zur Montage von Möbeln oder als Elemente zur Montage eines Arbeitsplatzes oder als Elemente zum Aufbauen von Messeständen oder als Werkstück (14) zur Bearbeitung mit einer CNC-Fräsmaschine ausgebildet sind.

10. Verbindungsvorrichtung mit Verbindungsteilen zum Verbinden von Elementen (1, 100, 101, 12, 13) miteinander,
**dadurch gekennzeichnet, dass**
jedes Verbindungsteil (4) ein erstes Verbindungsteil (4a) aufweist, das mit einer Längsnut (5) versehen ist, und ein zweites Verbindungsteil (4b), das mit einer Längsrippe (7) versehen ist, wobei zur Verbindung jeweils das Verbindungsteil (4b) mit der Längsrippe (7) in die Längsnut (5) des ersten Verbindungsteiles (4a) einschiebbar ist.

11. Verbindungsvorrichtung nach Anspruch 10,
**dadurch gekennzeichnet, dass**
die Längsnut (5) und die in die Längsnut einschiebbare Längsrippe (7) derart ausgebildet ist, dass die Verbindung unter Klemmung stattfindet und dass sich die Längsnut (5) und die Längsrippe (7) in der Draufsicht gesehen jeweils in ihrer Breite gegen die Einschubrichtung verjüngen.

12. Verbindungsvorrichtung nach einem der Ansprüche 10 oder 11
**dadurch gekennzeichnet , dass**
die Verbindungsteile (4a, 4b) wenigstens annähernd in Keilform ausgebildet sind, wobei die Längsnut (5) an den Rändern mit wenigstens annähernd in Schwalbenschwanzform ausgebildeten Hinterschneidungen versehen ist, und dass die Ränder der Längsrippe (7) derart konisch ausgebildet sind, dass sie in den Hinterschneidungen geführt sind.

13. Verbindungsvorrichtung nach einem der Ansprüche 10 bis 12,
**dadurch gekennzeichnet, dass**
das erste und/oder das zweite Verbindungselement (4a, 4b) direkt an dem zu verbindenden Bauteil (1, 100, 101, 13, 14) ausgebildet ist bzw. sind.

14. Verbindungsvorrichtung nach einem der Ansprüche 11 bis 13,
**dadurch gekennzeichnet, dass**
das erste und das zweite Verbindungselement (4a, 4b) in Taschen (3) eingebracht sind, die sich in Längsrichtung der zu verbindenden Elemente (1, 100, 101, 13, 14) erstrecken

15. Verbindungsvorrichtung nach einem der Ansprüche 10 bis 15,
**dadurch gekennzeichnet, dass**
die Verbindung zwischen dem ersten Verbindungselement (4a) und dem zweiten Verbindungselement (4b) form- und kraftschlüssig, vorzugsweise durch Klebung oder durch federnd ineinandergreifende Elemente (10a, 10b) erfolgt.
